# EUROPÄISCHE PATENTSCHRIFT

(11) **EP 3 738 837 B1**
(45) Veröffentlichungstag und Bekanntmachung des Hinweises auf die Patenterteilung: **05.02.2025**
(21) Anmeldenummer: 20172185.9
(22) Anmeldetag: 29.04.2020
(51) Int. Cl.: B60R 16/03, B60R 16/023, B60R 21/015, B60R 21/017, B60R 21/01

(54) **BORDNETZ UND KRAFTFAHRZEUG MIT BORDNETZ**
VEHICLE ELECTRICAL SYSTEM AND MOTOR VEHICLE WITH ELECTRICAL SYSTEM
RÉSEAU À BORD ET VÉHICULE AUTOMOBILE POURVU DE RÉSEAU À BORD

(30) Priorität: 03.05.2019 DE 102019206426
(43) Veröffentlichungstag der Anmeldung: 18.11.2020
(73) Patentinhaber: LEONI Bordnetz-Systeme GmbH, 97318 Kitzingen (DE)
(72) Erfinder: REITER, Daniel, 97072 Würzburg (DE); SEIDEL, Toralf, 97232 Giebelstadt (DE)
(74) Vertreter: FDST Patentanwälte

(56) Entgegenhaltungen:
- EP-A1- 3 135 531
- WO-A1-2017/062691
- WO-A1-2020/127126
- DE-A1- 10 300 464
- DE-A1- 102017 217 723
- DE-U1- 202005 016 196
- US-A1- 2009 289 579

## Beschreibung

Die Erfindung betrifft ein Bordnetz ausgebildet für ein Kraftfahrzeug und aufweisend eine verzweigte Struktur mit einem ersten Teil und mit einem zweiten Teil. Zudem betrifft die Erfindung ein Kraftfahrzeug mit einem solchen Bordnetz.

Bei der Herstellung von Kraftfahrzeugen werden häufig diverse Baugruppen oder Module vorgefertigt. Diese Baugruppen oder Module werden dann in Rahmen einer Endmontage verbaut, also zum Beispiel in eine Art Basisbaugruppe des Kraftfahrzeugs eingebaut. Derartige Baugruppen oder Module weisen dabei in vielen Fällen auch elektrische Einheiten auf, die im fertiggestellten Zustand des Kraftfahrzeugs Teil des Bordnetzes des Kraftfahrzeugs sind oder zumindest an das Bordnetz des Kraftfahrzeugs angebunden sind und die beim Einbau der entsprechenden Baugruppe bzw. des entsprechenden Moduls mit dem übrigen Bordnetz, insbesondere dem übrigen Bordnetz in der Basisbaugruppe, verbunden werden. Die Verbindung wird dabei typischerweise über eine Vielzahl von Leitungen oder Kabelverbindungen hergestellt.

Beispiele für Baugruppen oder Module, die sich prinzipiell vorfertigen lassen, sind zum Beispiel Sitze. Ein entsprechender Sitz mit Airbag ist zum Beispiel in der EP 3 135 531 A1 beschrieben.

Weiterhin ist in der US 2009/0289579 A1 eine Beleuchtungseinrichtung für den Innenraum beschrieben, bei der mehrere Lichtmodule über einen Bus angesteuert werden.

Ausgehend hiervon liegt der Erfindung die Aufgabe zugrunde, ein vorteilhaft ausgebildetes Bordnetz anzugeben sowie ein vorteilhaft ausgebildetes Kraftfahrzeug.

Diese Aufgabe wird erfindungsgemäß gelöst durch ein Bordnetz mit den Merkmalen des Anspruchs 1 sowie durch ein Kraftfahrzeug mit den Merkmalen des Anspruchs 12. Bevorzugte Weiterbildungen sind in den rückbezogenen Ansprüchen enthalten. Die im Hinblick auf das Bordnetz angeführten Vorteile und bevorzugten Ausgestaltungen sind sinngemäß auch auf das Kraftfahrzeug übertragbar und umgekehrt.

Ein erfindungsgemäßes Bordnetz ist dabei ausgebildet für ein Kraftfahrzeug und eingerichtet, die nachfolgend beschriebenen Prozesse, Arbeitsweisen und/oder Verfahrensschritte in zumindest einem Betriebsmodus auszuführen oder umzusetzen. Es weist eine verzweigte Struktur, beispielsweise eine Baumstruktur, mit einem ersten Teil, mit einem zweiten Teil sowie mit einem Feldbus auf.

Hierbei ist der Feldbus ausgebildet zur Übertragung von Nutzdaten, beispielsweise von Sensordaten und/oder von Steuersignalen, zwischen dem ersten Teil und dem zweiten Teil und zum Beispiel ausgestaltet nach Art eines LIN-Bus, eines CAN-Bus, eines CAN-FD-Bus oder eines Ethernet-Bus.

Weiter ist im zweiten Teil ein Busknoten und im ersten Teil eine mit dem Busknoten über den Feldbus verbundene Steuer- und Auswerteeinheit angeordnet. Der zweite Teil lässt sich daher auch als Knotenbereich oder Knotenareal bezeichnen. Bevorzugt verbindet der Feldbus, der typischerweise durch ein Kabel oder einen Kabelstrang ausgebildet ist, dabei lediglich die Steuer- und Auswerteeinheit mit dem Busknoten, so dass die Steuer- und Auswerteeinheit einerseits und der Busknoten andererseits quasi die beiden Enden einer einfachen unverzweigten Feldbusverbindung ausbilden.

Zudem weist das Kraftfahrzeug ein Modul mit mehreren als Sensoren und/oder als Aktoren ausgestalteten Hilfseinheiten auf. Die Hilfseinheiten sind also Teil des Moduls und typischerweise auch Teil des zweiten Teils des Bordnetzes. Auch der Busknoten ist Teil des zweiten Teils und üblicherweise auch Teil des Moduls. Bevorzugt ist der gesamte zweite Teil des Bordnetzes Teil des Moduls.

Hierbei ist der Busknoten, zumindest im Hinblick auf eine Behandlung oder ein Verarbeiten von Nutzdaten, bevorzugt lediglich zur Weiterleitung von Nutzdaten zwischen der Steuer- und Auswerteeinheit und den Hilfseinheiten ausgebildet.

D. h., dass der Busknoten typischerweise lediglich dazu ausgebildet ist, Nutzdaten von den Hilfseinheiten an die Steuer- und Auswerteeinheit zu übermitteln oder Hilfsdaten von der Steuer- und Auswerteeinheit hin zu den Hilfseinheiten zu übermitteln und insbesondere nicht, um entsprechende Nutzdaten und insbesondere Sensordaten auszuwerten. Der Busknoten ist somit vorzugsweise auch nicht dazu ausgebildet, Nutzdaten und insbesondere Sensordaten derart auszuwerten, dass im Busknoten basierend auf oder aufgrund von Nutzdaten bzw. Sensordaten ein Steuersignal generiert wird. Der Busknoten stellt somit eine Art einfacher Input-Output-Knoten (I/O-Node) dar und fungiert zum Beispiel (lediglich) als eine Art Übersetzer oder Umsetzer, der die Nutzdaten oder die die Nutzdaten enthaltenen Signale beispielsweise von einem ersten Format in ein zweites Format umwandelt, wobei eines dieser Formate die Übertragung der Nutzdaten über den Feldbus ermöglicht.

Insbesondere wenn eine solche Übersetzung oder Umsetzung durch den Busknoten erfolgt, ist es vorteilhaft, wenn im Busknoten eine Datenpufferung ermöglicht ist, beispielsweise mittels eines typischen Puffer-Speichers. Eine Zwischenspeicherung der Nutzdaten über eine solche Pufferung für die Kommunikation hinaus ist im Busknoten dagegen bevorzugt nicht vorgesehen oder ermöglicht.

Weiter wird eine Kommunikation, also eine Übertragung von Nutzdaten über den Feldbus, bevorzugt durch die Steuer- und Auswerteeinheit initiiert und insbesondere nicht durch den Busknoten.

Alternativ oder ergänzend hierzu dient der Busknoten (lediglich) dazu, Nutzdaten, die von der Steuer- und Auswerteeinheit über den Feldbus übermittelt werden, einem Adressaten zuzuordnen und diesem, insbesondere nur diesem, gezielt zuzuleiten, also derjenigen Hilfseinheit, für die die Nutzdaten vorgesehen sind.

Eine einfache Weiterleitung von Nutzdaten über den Busknoten ohne Übersetzung oder Umsetzung der Nutzdaten ist zum Beispiel zweckdienlich, wenn die Hilfseinheiten selbst Nutzdaten im Busformat, also in einem für die Übertragung über den Feldbus geeigneten Format, generieren oder verarbeiten. In diesem Fall wandeln dann zum Beispiel Sensoren physikalische Messwerte selbst in Nutzdaten im Busformat um.

In einigen Fällen dient der Busknoten zusätzlich zur Durchleitung oder Verteilung von elektrischer Leistung, insbesondere zur Versorgung der Hilfseinheiten. Ergänzend ist dann vorteilhafterweise auch der Feldbus für eine Leistungsübertragung, und somit insbesondere für eine "Power Line Communication", ausgelegt. In einem solchen Fall ist der Feldbus dann zum Beispiel als PSI5-Bus oder als DSI3-Bus ausgebildet. Alternativ oder ergänzend hierzu erfolgt eine parallele Übertragung von elektrischer Leistung über eine Versorgungsleitung, insbesondere parallel zum Feldbus und zum Beispiel auch am Busknoten vorbei.

Der Busknoten ist zudem bevorzugt teilnetzbetriebsfähig und weiter bevorzugt ist der gesamte zweite Teil des Bordnetzes oder das ganze Bordnetz teilnetzbetriebsfähig, also für einen Teilnetzbetrieb (z.B. CAN Partial Network) ausgebildet. Somit lässt sich z.B. der zweite Teil des Bordnetzes zeitweise in einen inaktiven (schlafenden) Modus versetzen (siehe beispielsweise ISO 11898-5 oder ISO 11898-6). Auf diese Weise lässt sich der Energieverbrauch im Kraftfahrzeug gering halten oder reduzieren.

Die Steuer- und Auswerteeinheit ist im Gegensatz zum Busknoten bevorzugt zur Auswertung von Nutzdaten und insbesondere von Sensordaten ausgebildet und typischerweise komplexer gestaltet als der Busknoten. Sie weist in vielen Fällen einen Prozessor oder eine Hochleistungs-Recheneinheit (HPC) auf. Weiter bevorzugt ist die Steuer- und Auswerteeinheit eingerichtet, um Nutzdaten und insbesondere Sensordaten derart auszuwerten, dass zumindest in einem Betriebsmodus in der Steuer- und Auswerteeinheit basierend auf oder aufgrund von Nutzdaten bzw. Sensordaten ein Steuersignal generiert wird oder Steuerdaten generiert werden.

Wie bereits zuvor dargelegt handelt es sich bei den Hilfseinheiten typischerweise um Sensoren oder Aktoren und dementsprechend weist dann das Modul einen oder mehrere Sensoren und/oder einen oder mehrere Aktoren auf. Bei einem entsprechenden Sensor handelt es sich dabei beispielsweise um einen Temperatursensor, um einen Feuchtigkeitssensor, um einen Drucksensor, um einen Sensor zur Erkennung einer Sitzbelegung, um einen Sensor zur Positionserkennung oder einen Sensor zur Erkennung von Vitalzeichen einer Person, beispielsweise zur Erkennung eines Herzschlags. Im erweiterten Sinne bildet aber auch ein Bedienelement einen Sensor im Sinne dieser Anmeldung aus, also zum Beispiel ein Taster oder ein Schalter. Weiter ist ein Aktor beispielsweise ausgestaltet als Stellmotor, zum Beispiel für eine Sitzverstellung, als Heizelement oder als Leuchtelement, zum Beispiel für ein sogenanntes "Ambient Light System".

Bei den zuvor genannten Nutzdaten handelt es sich in den meisten Fällen um Sensordaten und/oder um Steuerdaten, wobei diese typischerweise in Form von Signalen vorliegen oder in Signalen enthalten sind. Dabei generieren als Sensoren ausgebildete Hilfseinheiten im Betrieb typischerweise Sensordaten als Nutzdaten und Aktoren werden im Bedarfsfall mittels als Steuerdaten ausgebildeten Nutzdaten angesteuert.

Das Bordnetz ist dann zweckdienlicherweise derart ausgestaltet, dass die Sensoren im Betrieb zumindest zeitweise Sensordaten als Nutzdaten generieren und dass diese Nutzdaten dann an die Steuer- und Auswerteeinheit übermittelt werden, in welcher die Nutzdaten üblicherweise verarbeitet und insbesondere ausgewertet werden. Die Übermittlung der Nutzdaten erfolgt dabei über den Busknoten und den Feldbus, wobei die von den Sensoren generierten Nutzdaten zunächst an den Busknoten übertragen werden. Im Busknoten werden die von den Sensoren generierten Nutzdaten zwar typischerweise nicht ausgewertet jedoch in einigen Fällen dahingehend aufbereitet, dass diese über den Feldbus übertragbar sind und somit an die Steuer- und Auswerteeinheit weiterleitbar sind.

Hierbei gilt es zu bedenken, dass die von den Sensoren generierten Nutzdaten typischerweise in Form von Sensorsignalen vorliegen, die in der von den Sensoren generierten Form in einigen Fällen nicht über den vorhandenen Feldbus übertragbar sind. In diesen Fällen erfolgt dann im Busknoten eine Art Umsetzung oder Übersetzung der Nutzdaten in ein geeignetes Format. Die genaue Arbeitsweise des Busknoten hängt dabei von der Ausgestaltung des Feldbuses ab.

Ein einfaches Beispiel einer Umsetzung wäre hierbei das Konzept der Frequenzmodulation. Bei Nutzung einer Frequenzmodulation werden die Sensorsignale und somit die Nutzdaten von verschiedenen Sensoren über einen gemeinsamen Feldbus mithilfe eines gemeinsamen Signals übertragen, indem die Nutzdaten der verschiedenen Sensoren in verschiedene Frequenzbänder eingebunden werden, indem also für die verschiedenen Nutzdaten und deren Übertragung über den Feldbus verschiedene Frequenzbänder genutzt werden. Der Busknoten dient dann in einem solchen Ausführungsbeispiel also insbesondere dazu, die verschiedenen Sensorsignale auf ein Trägersignal aufzumodullieren und zwar insbesondere so, dass deren Informationsgehalt in verschiedenen voneinander getrennten Frequenzbändern enthalten sind.

Im Falle der als Aktoren ausgebildeten Hilfseinheiten ist es dann bevorzugt so, dass zur Ansteuerung eines Aktors oder mehrere Aktoren ein oder mehrere Steuersignale zu generieren sind und im Bedarfsfall generiert werden. Die Generierung oder Initiierung der Generierung erfolgt dabei typischerweise in der Steuer- und Auswerteeinheit. Auch bei einem solchen Steuersignal handelt es sich im Sinne dieser Anmeldung um Nutzdaten oder es sind in einem solchen Steuersignal Nutzdaten enthalten. Diese Nutzdaten sind dann von der Steuer- und Auswerteeinheit im Bedarfsfall an den entsprechenden Aktor oder die entsprechenden Aktoren zu übermitteln. Derartige Nutzdaten werden dabei zweckdienlicherweise von der Steuer- und Auswerteeinheit in einem Format generiert, welches die Übermittlung über den Feldbus erlaubt. Ein solches Format ist jedoch in einigen Fällen ungeeignet für einen als Empfänger vorgesehenen Aktor oder mehrere als Empfänger vorgesehene Aktoren und in diesen Fällen erfolgt dann im Busknoten eine Formatumwandlung hin zu einem für Aktoren geeigneten Format. Alternativ oder ergänzend dient der Busknoten dazu, die von der Steuer- und Auswerteeinheit über den Feldbus übertragenen Nutzdaten dem vorgesehenen Empfänger, also dem vorgesehenen Aktor, zuzuordnen und zuzuleiten. D. h., dass der Busknoten in diesem Fall die Nutzdaten verteilt und somit den vorgesehenen Empfängern zuordnet sowie zuleitet.

Weiterhin ist in dem zuvor beschriebenen Modul ein Airbag angeordnet. Dieser Airbag ist lediglich über den Feldbus und den Busknoten ansteuerbar. Außerdem sind, zumindest in der Schnittstelle zwischen dem Modul und dem übrigen Kraftfahrzeug, bevorzugt keine zusätzlichen oder separaten elektrischen Leitungen zur Ansteuerung des Airbags vorgesehen, die quasi parallel zum Feldbus geführt sind und die beispielsweise ein Airbag-Steuergerät mit dem Airbag verbinden. Stattdessen ist ein entsprechendes Airbag-Steuergerät über den Feldbus mit dem Airbag verbunden und dementsprechend wird im Bedarfsfall oder im Auslösefall ein Steuersignal vom Airbags-Steuergerät über den Feldbus an den Airbag übermittelt.

Der Verzicht auf zusätzliche parallel zum Feldbus geführte Leitungen im Bereich der Schnittstelle zwischen Modul und dem übrigen Kraftfahrzeug ermöglicht dabei eine vereinfachte Schnittstelle zwischen dem Modul und dem übrigen Kraftfahrzeug und somit insbesondere zwischen dem zweiten Teil des Bordnetzes und dem ersten Teil des Bordnetzes. Dabei wird durch die Reduzierung der Anzahl von physischen Verbindungen eine höhere Zuverlässigkeit erreicht, insbesondere in Fällen, in denen eine Beweglichkeit des Moduls relativ zum übrigen Kraftfahrzeug realisiert ist. Denn in diesen Fällen wird die Schnittstelle typischerweise Belastungen, wie Biegebelastungen, ausgesetzt, was insbesondere bei Kabelverbindungen typischerweise problematisch ist. Gerade eine hohe Biegelast oder Zugkraft kann in dickeren Kabelbündeln zu Problemen führen und daher ist eine Reduzierung der physischen Verbindungen von Vorteil.

Gemäß einer vorteilhaften Weiterbildung ist die Steuer- und Auswerteeinheit signaltechnisch mit einem Airbag-Steuergerät verbunden, welches üblicherweise Teil des ersten Teils ist und somit insbesondere nicht Teil des Moduls. Das Bordnetz ist dann typischerweise derart ausgestaltet, dass das Airbag-Steuergerät im Bedarfsfall ein Steuersignal zur Ansteuerung des Airbags im Modul generiert und dieses Steuersignal als Nutzdaten an die Steuer- und Auswerteeinheit übermittelt. Je nach Ausführungsvariante werden diese Nutzdaten dann entweder einfach weitergeleitet über den Feldbus und den Busknoten an den Airbag oder aber die entsprechenden Nutzdaten werden für eine Übertragung über den Feldbus aufbereitet und dazu beispielsweise in ein anderes Format umgesetzt. Nach der Übermittlung über den Feldbus werden die Nutzdaten dann im Busknoten beispielsweise wieder in ein anderes Format umgewandelt und an den Airbag weitergeleitet und/oder sie werden lediglich dem Airbag zugeordnet und dann ausschließlich an den Airbag übermittelt.

Einer alternativen Ausgestaltungsvariante entsprechend ist ein zuvor beschriebenes Airbag-Steuergerät nicht mit der Steuer- und Auswerteeinheit verbunden, sondern in die Steuer-Auswerteeinheit integriert, sodass die Steuer- und Auswerteeinheit selbst ein Airbags-Steuergerät aufweist oder ausbildet. D. h., dass die Steuerund Auswerteeinheit in diesem Fall ausgebildet ist, die Funktionen eines Airbag-Steuergerätes, insbesondere eines Airbag-Steuergerätes nach dem Stand der Technik, auszuüben, sodass kein zusätzliches Gerät im Sinne einer separaten Vorrichtung benötigt wird.

Von Vorteil ist es weiter, wenn das Modul lediglich über den Feldbus sowie über eine einzige Versorgungsleitung mit dem ersten Teil und somit mit dem übrigen Bordnetz verbunden ist. Die Versorgungsleitung dient dabei zur Übertragung von elektrischer Leistung und weist bevorzugt genau eine Phase oder Ader auf oder aber genau zwei Phasen oder Adern, zum Beispiel für Pluspol und Minuspol einer Gleichspannungsquelle. Sie dient typischerweise nicht zur Übermittelung von Informationen oder Nutzdaten und dementsprechend wird die Versorgungsleitung auch üblicherweise nicht genutzt für eine entsprechende Übermittlung von Nutzdaten.

Alternativ ist das Modul lediglich über den Feldbus mit dem ersten Teil und somit insbesondere auch mit dem übrigen Bordnetz verbunden. In einem solchen Fall erfolgt dann weiter bevorzugt in zumindest einem Betriebsmodus über den Feldbus eine Übertragung von elektrischer Leistung aus dem ersten Teil in den zweiten Teil und somit in das Modul. Ob eine zusätzliche Versorgungsleitung genutzt wird oder nicht, hängt üblicherweise von der Ausgestaltung des Feldbuses und somit der über den Feldbus übertragbaren elektrischen Leistung sowie vom zu erwartenden Bedarf an elektrischer Leistung der Hilfseinheiten ab.

Weiter ist eine Ausgestaltungsvariante von Vorteil, bei der das gesamte Modul frei von Auswerteeinheiten ist. D. h., dass in diesem Fall nicht nur der Busknoten unfähig ist, Informationen auszuwerten, also insbesondere Sensordaten, sondern dass darüber hinaus auch keine weitere Einheit im Modul vorhanden ist, die eine solche Funktion oder eine entsprechende Fähigkeit aufweist. Eine entsprechende Auswertungsfunktion ist dann also lediglich im ersten Teil ermöglicht und dementsprechend können Informationen und insbesondere Sensordaten lediglich im ersten Teil ausgewertet werden, beispielsweise durch die Steuer- und Auswerteeinheit.

In vorteilhafter Weiterbildung ist dann das Modul derart ausgestaltet, dass keine Komponente oder kein Bauteil des Moduls eine höhere Risikoeinstufung aufweist als ASIL B gemäß ISO 26262. D.h., dass auch die Risikoeinstufung des Busknotens typischerweise kleiner gleich ASIL B ist. Es werden also alle Komponenten oder Bauteile, die eine höhere Risikoeinstufung aufweisen, wie zum Beispiel die Steuer- und Auswerteeinheit (üblicherweise ASIL D) oder das Airbag-Steuergerät (üblicherweise ASIL D), und die für das Kraftfahrzeug vorgesehen sind, im ersten Teil des Bordnetzes angeordnet und somit im Übrigen Kraftfahrzeug, also nicht im Modul.

Gemäß einer weiteren Ausführungsvariante weist das Kraftfahrzeug mehrere Module der zuvor beschriebenen Art auf, wobei jedes weitere Modul einen weiteren Teil des Bordnetzes aufweist mit einem weiteren Busknoten, der über einen zugehörigen weiteren Feldbus mit dem ersten Teil verbunden ist. Die Busknoten sind dabei bevorzugt im Wesentlichen identisch ausgestaltet und weiter bevorzugt sind auch die Feldbusse im Wesentlichen identisch ausgestaltet.

Dabei sind in vorteilhafter Weiterbildung mehrere diese Feldbusse insbesondere unmittelbar mit der Steuer- und Auswerteeinheit verbunden, die dann eine Art zentrale Steuer- und Auswerteeinheit im Kraftfahrzeug ausbildet. Auf diese Weise lässt sich dann auch ein zentralisiertes Bordnetzes realisieren, welches im Extremfall die Steuer- und Auswerteeinheit als einzige Steuer- und Auswerteeinheit aufweist. Diese verarbeitet dann die Nutzdaten aller Sensoren im Kraftfahrzeug und steuert alle Aktoren und/oder alle Airbags im Kraftfahrzeug an.

Weiter ist ein zuvor beschriebenes Modul beispielsweise als Sitz, als Tür, als Heckklappe, als Mittelkonsole oder als Dachhimmel ausgebildet.

Ausführungsbeispiele der Erfindung werden nachfolgend anhand einer schematischen Zeichnung näher erläutert. Darin zeigen:
- FIG 1: in einem Blockschaltbild eine erste Ausführung eines Kraftfahrzeugs mit einer ersten Ausführung eines Bordnetzes sowie
- FIG 2: in einem Blockschaltbild eine zweite Ausführung des Kraftfahrzeugs mit einer zweiten Ausführung des Bordnetzes.

Einander entsprechende Teile sind in allen Figuren jeweils mit den gleichen Bezugszeichen versehen.

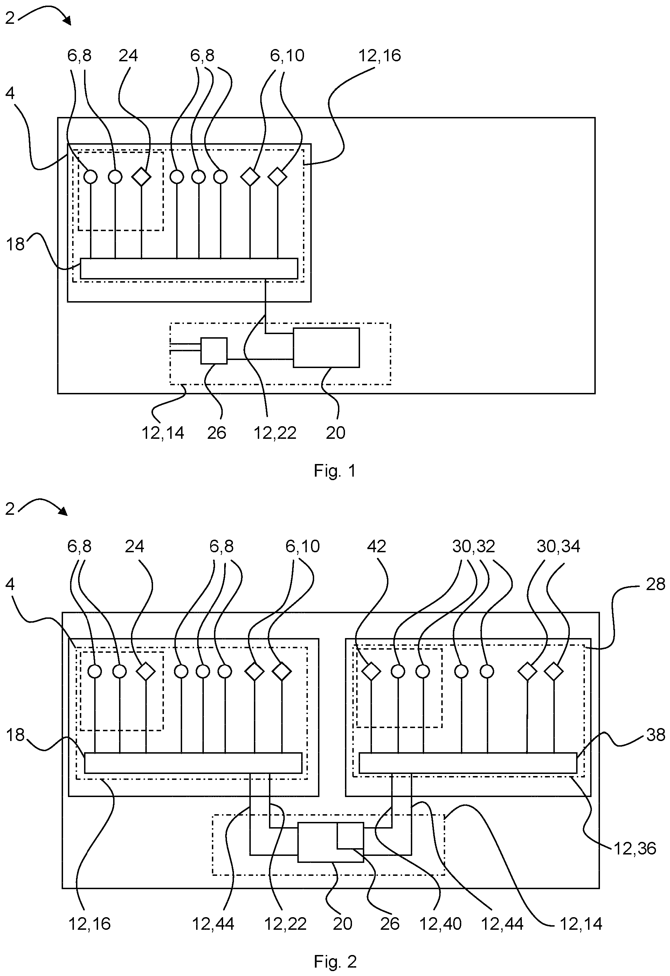

Ein nachfolgend exemplarisch beschriebenes Kraftfahrzeug 2 ist in Fig. 1 schematisch wiedergegeben und weist ein als Sitz ausgebildetes Modul 4 auf. Dieses Modul 4 oder der Sitz wird im Zuge der Herstellung des Kraftfahrzeuges 2 vorgefertigt, beispielsweise von einem Zulieferer, und im Rahmen einer Endmontage verbaut, also insbesondere in eine Karosserie des Kraftfahrzeuges 2 eingebaut.

Der Sitz oder das Modul 4 weist im Ausführungsbeispiel mehrere Hilfseinheiten 6 auf, wobei jede Hilfseinheit 6 als Sensor 8 oder als Aktor 10 ausgebildet ist. Bei einem entsprechenden Sensor 8 handelt es sich beispielsweise um einen Temperatursensor, um einen Feuchtigkeitssensor, um einen Sensor zur Erkennung der Sitzbelegung, also zum Beispiel um einen Drucksensor, um einen Sensor zur Erkennung der Position des Sitzes oder einen Sensor zur Erkennung von Vitalzeichen einer Person, zum Beispiel zur Erkennung eines Herzschlags. Weiter ist ein Aktor beispielsweise ausgestaltet als Stellmotor, zum Beispiel für eine Sitzverstellung, als Heizelement oder als Leuchtelement, beispielsweise für ein sogenanntes "Ambient Light System".

Zudem weist das Kraftfahrzeug 2 ein Bordnetz 12 auf mit einem ersten Teil 14 sowie mit einem zweiter Teil 16, wobei der zweite Teil 16 Teil des Moduls 4 ist. Der zweite Teil 16 weist weiter einen Busknoten 18 auf, der über eine Schnittstelle zwischen dem Modul 4 und dem übrigen Kraftfahrzeug 2 mit einer Steuer- und Auswerteeinheit 20 verbunden ist, wobei die Steuer- und Auswerteeinheit 20 Teil des erster Teils 14 des Bordnetzes 12 ist. D. h., dass der zweite Teil 16 und somit auch das Modul 4 über die Schnittstelle mit dem ersten Teil 14 verbunden ist, wobei über die Schnittstelle elektrische Leistung und Nutzdaten übertragbar sind und je nach Betriebsmodus auch übertragen werden. Im Ausführungsbeispiel ist diese Schnittstelle als Feldbus 22 ausgebildet und insbesondere als CAN-FD-Bus oder Ethernet-Bus.

Hierbei ist der Busknoten 18 lediglich zur Weiterleitung von Nutzdaten zwischen der Steuer- und Auswerteeinheit 20 und den Hilfseinheiten 6 ausgebildet. D. h., dass der Busknoten 18 typischerweise lediglich dazu ausgebildet ist, Nutzdaten von den Hilfseinheiten 6 an die Steuer- und Auswerteeinheit 20 zu übermitteln oder Hilfsdaten von der Steuer- und Auswerteeinheit 20 hin zu den Hilfseinheiten 6 zu übermitteln und insbesondere nicht, um entsprechende Nutzdaten auszuwerten. Der Busknoten 18 stellt somit eine Art einfacher Input-Output-Knoten (I/O-Node) dar und fungiert zum Beispiel als eine Art Übersetzer oder Umsetzer, der die Nutzdaten oder die die Nutzdaten enthaltenen Signale beispielsweise von einem ersten Format in ein zweites Format umwandelt, wobei eines dieser Formate die Übertragung der Nutzdaten über den Feldbus 22 ermöglicht. Alternativ oder ergänzend hierzu dient der Busknoten 18 dazu, Nutzdaten, die von der Steuer- und Auswerteeinheit 20 über den Feldbus 22 übermittelt werden, einem Adressaten zuzuordnen und diesem, insbesondere nur diesem, gezielt zuzuleiten, also derjenigen Hilfseinheit 6, für die die Nutzdaten vorgesehen sind.

Die Hilfseinheiten 6 sind je nach Ausführungsvariante über unterschiedlich ausgestaltete Verbindungen mit dem Busknoten 18 verbunden. So sind gemäß einer Ausführungsvariante einige der Hilfseinheiten 6 über einen LIN-Bus mit dem Busknoten 18 verbunden und andere über eine einfachere Verbindung.

Des Weiteren weist das Modul 4 im Ausführungsbeispiel zumindest einen Airbag 24 auf. Jener Airbag 24 wird im Auslösefall durch ein Steuersignal ausgelöst, welches in einem Airbag-Steuergerät 26 generiert wird. Dass Airbag-Steuergerät 26 ist dabei im Ausführungsbeispiel Teil des ersten Teils 14 des Bordnetzes 12 und ist somit außerhalb des Moduls 4 positioniert. Das Kraftfahrzeug 2 und insbesondere das Bordnetz 12 ist dabei derart ausgestaltet, dass im Auslösefall das Steuersignal vom Airbag-Steuergerät 26 zunächst an die Steuer- und Auswerteeinheit 20 übermittelt wird und dann über den Feldbus 22 und den Busknoten 18 schließlich zum Airbag 24 weitergeleitet wird.

Ein weiteres Ausführungsbeispiel ist in Fig. 2 dargestellt. Hier weist das Kraftfahrzeug 2 zusätzlich zum Modul 4 ein weiteres Modul 28 auf, welches im Ausführungsbeispiel als Tür ausgebildet ist. Das weitere Modul 28 weist seinerseits weitere Hilfseinheiten 30 auf, die wiederum als weitere Sensoren 32 oder als weitere Aktoren 34 ausgebildet sind. Zudem weist das weitere Modul 28 einen dritten Teil 36 des Bordnetzes 12 auf mit einem weiteren Busknoten 38, der über einen weiteren Feldbus 40 mit der Steuer- und Auswerteeinheit 20 verbunden ist. Der weitere Busknoten 38 ist dabei im Ausführungsbeispiel im Wesentlichen identisch ausgestaltet wie der Busknoten 18 des Moduls 4. Auch der weitere Feldbus 40 ist im Ausführungsbeispiel im Wesentlichen identisch ausgestaltet wie der Feldbus 22 des Moduls 4.

Zudem weist das weitere Modul 28 einen weiteren Airbag 42 auf. Auch dieser weitere Airbag 42 wird im Auslösefall durch das Airbag-Steuergerät 26 angesteuert, wobei das entsprechende Steuersignal, analog zur Ansteuerung des Airbags 24 im Modul 4, über den weiteren Feldbus 40 und den weiteren Busknoten 38 an den weiteren Airbag 42 übermittelt wird. Im Gegensatz zur Ausführungsvariante gemäß Fig. 1 ist das Airbag-Steuergerät 26 im Ausführungsbeispiel gemäß Fig. 2 jedoch integraler Bestandteil der Steuer- und Auswerteeinheit 20.

Weiter sind im Ausführungsbeispiel gemäß Fig. 2 die Busknoten 18,38 zusätzlich über Versorgungsleitungen 44 mit der Steuer- und Auswerteeinheit 20 verbunden. Die Versorgungsleitungen 44 dienen dabei (ausschließlich) zur Übertragung von elektrischer Leistung.

In beiden Ausführungsvarianten sind weiter die Module 4,28 derart ausgestaltet, dass keine Komponente oder kein Bauteil eine höhere Risikoeinstufung aufweist als ASIL B gemäß ISO 26262. Dabei entsprechen die Risikoeinstufungen der Bauteile innerhalb der gestrichelten Rahmen sowie die der Busknoten 18,38 jeweils ASIL B und die Risikoeinstufung der übrigen Bauteile der Module 4,28 entspricht ASIL A oder weniger. Die Komponenten oder Bauteile, die eine höhere Risikoeinstufung aufweisen, also die Steuer- und Auswerteeinheit 20 und das Airbag-Steuergerät 26, die jeweils die Risikoeinstufung ASIL D aufweisen, sind im ersten Teil 14 des Bordnetzes 12 angeordnet.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen.

### Bezugszeichenliste

- 2: Kraftfahrzeug
- 4: Modul
- 6: Hilfseinheit
- 8: Sensor
- 10: Aktor
- 12: Bordnetz
- 14: erster Teil
- 16: zweiter Teil
- 18: Busknoten
- 20: Steuer- und Auswerteeinheit
- 22: Feldbus
- 24: Airbag
- 26: Airbag-Steuergerät
- 28: weiteres Modul
- 30: weitere Hilfseinheit
- 32: weiterer Sensor
- 34: weiterer Aktor
- 36: dritter Teil
- 38: weiterer Busknoten
- 40: weiterer Feldbus
- 42: weiterer Airbag
- 44: Versorgungsleitung

## Patentansprüche

1. Bordnetz (12) ausgebildet für ein Kraftfahrzeug (2) und aufweisend eine verzweigte Struktur mit einem ersten Teil (14), mit einem zweiten Teil (16) sowie mit einem Feldbus (22) zur Übertragung von Nutzdaten zwischen dem ersten Teil (14) und dem zweiten Teil (16), wobei im zweiten Teil (16) ein Busknoten (18) und im ersten Teil (14) eine mit dem Busknoten (18) über den Feldbus (22) verbundene Steuer- und Auswerteeinheit (20) angeordnet sind, wobei das Kraftfahrzeug (2) ein Modul (4) mit mehreren als Sensoren (8) und/oder als Aktoren (10) ausgestalteten Hilfseinheiten (6) aufweist, die Teil des zweiten Teils (16) sind, und
wobei in dem Modul (4) ein Airbag (24) angeordnet ist, welcher lediglich über den Feldbus (22) und den Busknoten (18) ansteuerbar ist.

2. Bordnetz (12) nach Anspruch 1,
wobei der Busknoten (18) lediglich zur Weiterleitung von Nutzdaten zwischen der Steuer- und Auswerteeinheit (20) und den Hilfseinheiten (6) ausgebildet ist.

3. Bordnetz (12) nach Anspruch 1 oder 2,
wobei die Steuer- und Auswerteeinheit (20) signaltechnisch mit einem Airbag-Steuergerät (26) verbunden ist, welches Teil des ersten Teils (14) ist.

4. Bordnetz (12) nach Anspruch 1 oder 2,
wobei die Steuer- und Auswerteeinheit (20) ein Airbag-Steuergerät (26) aufweist.

5. Bordnetz (12) nach einem der Ansprüche 1 bis 4,
wobei das Modul (4) lediglich über den Feldbus (22) sowie über eine einzige Versorgungsleitung (44) mit dem ersten Teil (14) verbunden ist.

6. Bordnetz (12) nach einem der Ansprüche 1 bis 4,
wobei das Modul (4) lediglich über den Feldbus (22) mit dem ersten Teil (14) verbunden ist.

7. Bordnetz (12) nach einem der Ansprüche 1 bis 6,
wobei das Modul (4) frei von einer Auswerteeinheit ist.

8. Bordnetz (12) nach einem der Ansprüche 1 bis 7,
wobei das Modul (4) frei von Bauteilen ist mit einer höheren Risikoeinstufung als ASIL B gemäß ISO 26262.

9. Bordnetz (12) nach einem der Ansprüche 1 bis 8,
wobei das Modul (4) als Sitz, als Tür, als Heckklappe, als Mittelkonsole oder als Dachhimmel ausgebildet ist.

10. Bordnetz (12) nach einem der Ansprüche 1 bis 9,
wobei dieses einen dritten Teil (36) sowie einen weiteren Feldbus (40) zur Übertragung von Nutzdaten zwischen dem ersten Teil (14) und dem dritten Teil (36) aufweist, wobei im dritten Teil (36) ein weiterer Busknoten (38) angeordnet ist, der über den weiteren Feldbus (40) mit der Steuer- und Auswerteeinheit (20) verbunden ist, wobei das Kraftfahrzeug (2) ein weiteres Modul (28) mit mehreren als Sensoren (32) und/oder als Aktoren (34) ausgestalteten weiteren Hilfseinheiten (30) aufweist, die Teil des dritten Teils (36) sind, und wobei der weitere Busknoten (38) lediglich zur Weiterleitung von Nutzdaten zwischen der Steuer- und Auswerteeinheit (20) und den weiteren Hilfseinheiten (30) des dritten Teils (36) ausgebildet ist.

11. Bordnetz (12) nach Anspruch 10,
wobei in dem weiteren Modul (28) ein weiterer Airbag (42) angeordnet ist, welcher lediglich über den weiteren Feldbus (40) und den weiteren Busknoten (38) ansteuerbar ist.

12. Kraftfahrzeug (2) aufweisend ein Bordnetz (12) nach einem der vorherigen Ansprüche.

## Claims

1. A vehicle electrical system (12) designed for a motor vehicle (2) and having a branched structure with a first part (14), with a second part (16) and with a field bus (22) for transmitting user data between the first part (14) and the second part (16),
wherein a bus node (18) is arranged in the second part (16) and a control and evaluation unit (20) connected to the bus node (18) via the field bus (22) is arranged in the first part (14),
wherein the motor vehicle (2) has a module (4) with several auxiliary units (6) configured as sensors (8) and/or as actuators (10), which are part of the second part (16), and
wherein an airbag (24) is arranged in the module (4), which can be controlled only via the field bus (22) and the bus node (18).

2. The vehicle electrical system (12) according to claim 1,
wherein the bus node (18) is designed only for forwarding user data between the control and evaluation unit (20) and the auxiliary units (6).

3. The vehicle electrical system (12) according to claim 1 or 2,
wherein the control and evaluation unit (20) is connected in terms of signalling to an airbag control device (26), which is part of the first part (14).

4. The vehicle electrical system (12) according to claim 1 or 2,
wherein the control and evaluation unit (20) has an airbag control device (26).

5. The vehicle electrical system (12) according to any one of claims 1 to 4,
wherein the module (4) is connected to the first part (14) only via the field bus (22) and via a single supply line (44).

6. The vehicle electrical system (12) according to any one of claims 1 to 4,
wherein the module (4) is connected to the first part (14) only via the field bus (22).

7. The vehicle electrical system (12) according to any one of claims 1 to 6,
wherein the module (4) is free of an evaluation unit.

8. The vehicle electrical system (12) according to any one of claims 1 to 7,
wherein the module (4) is free of components with a risk rating higher than ASIL B according to ISO 26262.

9. The vehicle electrical system (12) according to any one of claims 1 to 8,
wherein the module (4) is designed as a seat, as a door, as a tailgate, as a centre console or as a roof liner.

10. The vehicle electrical system (12) according to any one of claims 1 to 9,
wherein this has a third part (36) and a further field bus (40) for transmitting user data between the first part (14) and the third part (36),
wherein a further bus node (38) is arranged in the third part (36) and is connected to the control and evaluation unit (20) via the further field bus (40), wherein the motor vehicle (2) has a further module (28) with several further auxiliary units (30) configured as sensors (32) and/or as actuators (34), which are part of the third part (36), and
wherein the further bus node (38) is designed only for forwarding user data between the control and evaluation unit (20) and the further auxiliary units (30) of the third part (36).

11. The vehicle electrical system (12) according to claim 10,
wherein a further airbag (42) is arranged in the further module (28), which can only be controlled via the further field bus (40) and the further bus node (38).

12. A motor vehicle (2) having a vehicle electrical system (12) according to any of the preceding claims.

## Revendications

1. Réseau de bord (12) configuré pour un véhicule automobile (2) et présentant une structure ramifiée comportant une première partie (14), comportant une deuxième partie (16) et comportant un bus de terrain (22) destiné au transfert de données utiles entre la première partie (14) et la deuxième partie (16), dans lequel un noeud (18) de bus est disposé dans la deuxième partie (14) et une unité d'évaluation et de commande (20) raccordée au noeud (18) de bus via le bus de terrain (22) est disposée dans la première partie (14), dans lequel le véhicule automobile (2) comporte un module (4) comportant plusieurs unités auxiliaires (6) configurées sous forme de capteurs (8) et/ou d'actionneurs (10) qui font partie de la deuxième partie (16), et
dans lequel est disposé dans le module (4) un airbag (24) qui ne peut être commandé que via le bus de terrain (22) et le noeud (18) de bus.

2. Réseau de bord (12) selon la revendication 1,
dans lequel le noeud (18) de bus est conçu uniquement pour la transmission de données utiles entre l'unité d'évaluation et de commande (20) et les unités auxiliaires (6).

3. Réseau de bord (12) selon la revendication 1 ou 2,
dans lequel l'unité d'évaluation et de commande (20) est raccordée par signaux à un dispositif de commande (26) d'airbag, qui fait partie de la première partie (14).

4. Réseau de bord (12) selon la revendication 1 ou 2,
dans lequel l'unité d'évaluation et de commande (20) comporte un dispositif de commande (26) d'airbag.

5. Réseau de bord (12) selon l'une quelconque des revendications 1 à 4, dans lequel le module (4) est raccordé à la première partie (14) uniquement via le bus de terrain (22) ainsi que via une unique ligne d'alimentation (44).

6. Réseau de bord (12) selon l'une quelconque des revendications 1 à 4, dans lequel le module (4) est raccordé à la première partie (14) uniquement via le bus de terrain (22).

7. Réseau de bord (12) selon l'une quelconque des revendications 1 à 6, dans lequel le module (4) est dépourvu d'une unité d'évaluation.

8. Réseau de bord (12) selon l'une quelconque des revendications 1 à 7, dans lequel le module (4) est dépourvu de composants présentant une classe de risque supérieure à ASIL B selon ISO 26262.

9. Réseau de bord (12) selon l'une quelconque des revendications 1 à 8, dans lequel le module (4) est configuré sous forme de siège, de portière, de hayon, de console centrale ou de ciel de toit.

10. Réseau de bord (12) selon l'une quelconque des revendications 1 à 9, dans lequel ce dernier présente une troisième partie (36) ainsi qu'un bus de terrain supplémentaire (40) destiné au transfert de données entre la première partie (14) et la troisième partie (36), dans lequel est disposé dans la troisième partie (36) un noeud supplémentaire (38) de bus qui est raccordé à l'unité d'évaluation et de commande (20) via le bus de terrain supplémentaire (40), dans lequel le véhicule automobile (2) comporte un module supplémentaire (28) comportant plusieurs unités auxiliaires supplémentaires (30) configurées sous forme de capteurs (32) et/ou d'actionneurs (34) qui font partie de la troisième partie (36), et dans lequel le noeud supplémentaire (38) de bus est uniquement configuré pour la transmission de données utiles entre l'unité d'évaluation et de commande (20) et les unités auxiliaires supplémentaires (30) de la troisième partie (36)

11. Réseau de bord (12) selon la revendication 10,
dans lequel est disposé dans le module supplémentaire (28) un airbag supplémentaire (42) qui ne peut être commandé que via le bus de terrain supplémentaire (40) et le noeud supplémentaire (38) de bus.

12. Véhicule automobile (2) comportant un réseau de bord (12) selon l'une quelconque des revendications précédentes.
